# EUROPEAN PATENT SPECIFICATION

(11) **EP 4 586 374 B1**
(45) Date of publication and mention of the grant of the patent: **02.12.2026**
(21) Application number: 23875199.4
(22) Date of filing: 04.10.2023
(51) Int. Cl.: H01M 10/04, H01M 10/647, H01M 10/654, H01M 10/658, H01M 10/6554, H01M 10/6555, H01M 50/48, H01M 50/54, H01M 50/105, H01M 50/143, H01M 50/178, H01M 50/211, H01M 50/474, H01M 50/489, H01M 50/531, H01M 50/536, H01M 50/553

(54) **THERMAL PROPAGATION PREVENTING BATTERY CELL**
BATTERIEZELLE ZUR VERHINDERUNG DER THERMISCHEN AUSBREITUNG
ÉLÉMENT DE BATTERIE EMPÊCHANT LA PROPAGATION THERMIQUE

(30) Priority: 04.10.2022 KR 20220126276
(43) Date of publication of application: 16.07.2025
(73) Proprietor: LG Energy Solution, Ltd., Seoul 07335 (KR)
(72) Inventor: JANG, Sunghwan, Daejeon 34122 (KR); JUNG, Hyemi, Daejeon 34122 (KR); LEE, Junghoon, Daejeon 34122 (KR); YUN, Hyun Seop, Daejeon 34122 (KR)
(74) Representative: Plasseraud IP
(86) International application number: PCT/KR2023/015227
(87) International publication number: WO 2024/076135

(56) References cited:
- EP-A1- 2 840 644
- WO-A1-2022/183953
- CN-A- 110 581 250
- JP-A- 2007 311 264
- JP-A- 2014 186 845
- KR-A- 20080 074 239
- KR-A- 20180 061 681
- KR-A- 20220 015 252
- US-A1- 2021 265 711

## Description

### [TECHNICAL FIELD]

This application claims the benefit of priority based on Korean Patent Application No. 10-2022-0126276 filed on October 4, 2022.

The present disclosure relates to a pouch type battery cell stacked and embedded in a battery module capable of preventing heat propagation.

### [BACKGROUND ART]

Secondary batteries, which are easy to apply depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium-to-large battery module in which multiple battery cells are electrically connected is used.

Since it is desirable for medium to large-sized battery modules to be manufactured as small and light as possible, rectangular batteries and pouch-type batteries that may be stacked with high integration and have a small weight-to-capacity battery are mainly used as battery cells for medium-to-large battery modules.

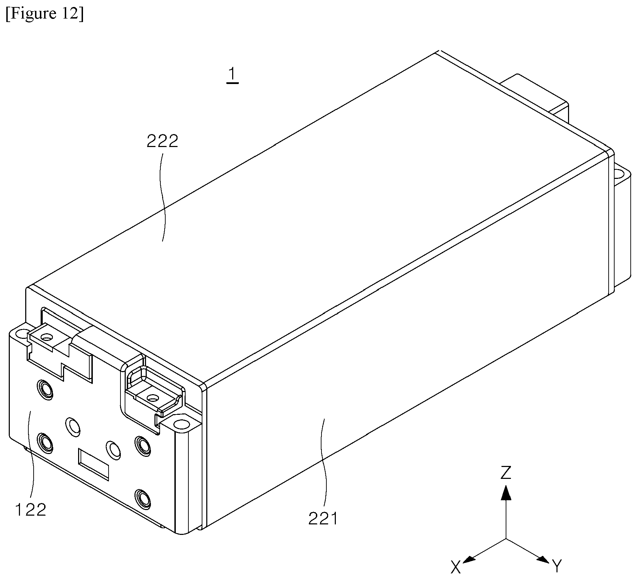

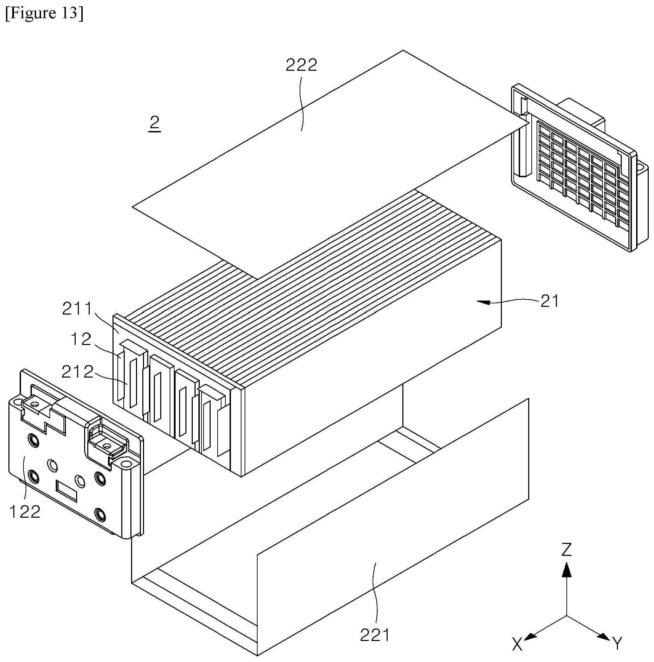

FIGS. 12 and 13 are a perspective view and an exploded perspective view illustrating a battery module including a pouch type battery cell, respectively. Referring to FIGS. 12 and 13, the battery module 2 may include a battery cell laminate 21 manufactured by stacking a plurality of pouch type battery cells (hereinafter referred to as "battery cell") and a housing 22 accommodating the battery cell laminate 21.

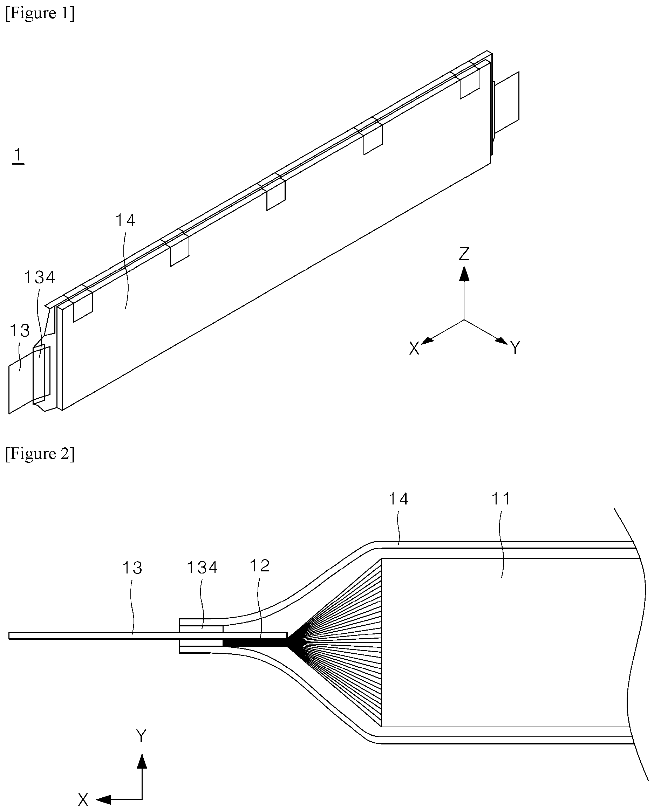

FIGS. 1 and 2 are a perspective view and a cross-sectional view illustrating a battery cell, respectively. Referring to FIGS. 1 and 2, a battery cell 1 includes: an electrode assembly 11 formed by stacking a plurality of electrodes with a separator interposed therebetween; an electrode tab 12 extending from each of the plurality of electrodes to protrude from the electrode assembly 11; a sealed pouch accommodating the electrode assembly; and an electrode lead electrically connected to the electrode tab 12 and protruding from the pouch 14. Here, the electrode assembly 11 is formed by stacking a plurality of electrodes with a separator interposed therebetween. The pouch 14 may be filled with an electrolyte solution to impregnate the electrode assembly 11.

Meanwhile, there is a risk that the battery cell may overheat and ignite due to a short circuit. When the battery cell ignites, heat, flame and gas may be discharged from the battery cell. Additionally, heat, flame and gas resulting from ignition of a battery cell may spread to other neighboring battery cells, causing serial ignition.

In order to prevent this, attempts have been made to manufacture a portion of the above-described separator with insulating materials. However, such structure resulted in degradation of impregnation of the separators with electrolyte solution such that the efficiency of the battery itself was significantly reduced.

Accordingly, a structure of battery cells and battery modules are necessary wherein ignition of the battery cell is fundamentally suppressed and heat propagation between battery cells is further suppressed to prevent chain ignition.

Document EP 2840644 A1 relates to a battery cell of improved cooling efficiency. Document JP 2007 311264 A relates to a battery structure, and more particularly, to a battery structure with improved heat dissipation and vibration isolation. Document US 2021/265711 discloses a bipolar battery and a bipolar battery stack. Document KR 2022 0015252 A relates to a pouch-type battery cell including an elastic member and a battery pack including the same.

### [DISCLOSURE]

### [TECHNICAL PROBLEM]

The present disclosure addresses the issues raised in the background, and it is an object of the present disclosure to provide a battery cell structure capable of preventing ignition.

It is another object of the present disclosure to provide a battery cell and a structure of a battery module including the same capable of preventing serial ignition between battery cells.

It is yet another object of the present disclosure to provide a battery cell and a structure of a battery module that may be manufactured by the manufacturing method and manufacturing equipment of conventional battery modules without reducing the energy density or the performance of the battery to achieve the above-described objects.

The technical problems to be solved by the present disclosure are not limited to the objects described above, and other objects and advantages of the present disclosure that are not described may be understood through the following description and will be more clearly understood by the examples of the present disclosure.

### [TECHNICAL SOLUTION]

The invention is defined in the appended set of claims.
In order to solve above-described problems, the present disclosure provides a structure of a battery cell including: an electrode assembly including a stack of a plurality of electrodes with a separator therebetween; an electrode tab extending from each of the plurality of electrodes and protruding from the electrode assembly; a sealed pouch accommodating the electrode assembly; and an electrode lead electrically connected to the electrode tab and protruding from the sealed pouch, wherein the electrode assembly is a plurality of electrode assemblies; and is stacked with a first insulation pad in a thickness direction.

The electrode assembly is a pair of electrode assemblies comprising a first electrode assembly and a second electrode assembly. However, the number of electrode assemblies is not limited thereto, and may be greater than two.

The first insulation pad may include an insulating material.

The first insulation pad includes a heat-resistant and/or fire-resistant material.

The first insulation pad may include compressible material. In such case, the first insulation pad may be configured to absorb swelling and tolerance of the battery cell.

The method for stacking the electrode assembly and the first insulation pad together may vary. For example, the first insulation pad may be between the electrode assemblies. Alternately, each electrode assembly is between a plurality of first insulation pads. Alternately, the electrode assembly and the first insulation pads may be alternately stacked.

As a plurality of electrode assemblies are provided, a corresponding plurality of electrode tabs may be provided.

The electrode tab may include: a first electrode tab protruding from the first electrode assembly; and a second electrode tab protruding from the second electrode assembly. However, the number of electrode tabs is not limited thereto, and may be greater than two.

The first electrode tab and the second electrode tab may be connected to the electrode lead in parallel. The connection can be established by welding. The welding may include a welding method selected from various welding methods including ultrasonic welding, laser welding and resistance welding.

Since a plurality of the electrode assemblies are connected to each other in parallel at the electrode tab portions, the first insulation pad between the electrode assemblies may be made of a material with a low impregnation of electrolyte solution as long as the material is insulating, heat-resistant, and/or fire-resistant

Hereinafter, while two electrode assemblies are exemplified, the technical solution of the present disclosure described below may be applied to a case where the number of electrode assemblies is greater than two.

The first electrode tab and the second electrode tab may be welded to two ends of the electrode lead in a thickness direction, respectively.

Alternately, the first electrode tab and the second electrode tab may be stacked and welded to two ends of the electrode lead in a thickness direction, respectively.

The electrode lead may include: a lead portion protruding outward from the sealed pouch; a first weld portion where the first electrode tab may be welded; and a second weld portion where the second electrode tab may be welded

The first electrode assembly may be on one side of the electrode lead in a thickness direction and the second electrode assembly is on an other side of the electrode lead in the thickness direction. Here, the first weld portion may be on the one side of the electrode lead in the thickness direction with respect to the lead portion, and the second weld portion may be on the other side of the electrode lead in the thickness direction with respect to the lead portion.

The first electrode tab may be on one side of the electrode lead in a height direction and the second electrode tab may be on an other side of the electrode lead in the height direction. In such a case, the first weld portion may be on the one side of the electrode lead in the height direction with respect to the lead portion, and the second weld portion may be on the other side of the electrode lead in the height direction with respect to the lead portion.

The present disclosure also provides a battery module including a battery cell stack or laminate including a plurality of battery cells stacked in a thickness direction.

The battery cell stack or laminate may include the plurality of battery cells stacked along with a second insulation pad.

The second insulation pad may be between the plurality of battery cells.

The second insulation pad may include a heat-resistant and/or fire-resistant material.

The second insulation pad may include compressible material. In such case, the first insulation pad may be configured to absorb swelling of the battery cell and tolerance of the battery cell and the battery module.

The method for stacking the battery cell and the second insulation pad together may vary. For example, the second insulation pad may be between the battery cells. Alternately, each battery cell may be between a plurality of second insulation pads.

The present disclosure also provides a battery pack including above-described battery module and a vehicle including the battery pack.

In order to increase the charge and discharge capacity and/or power, a plurality of battery modules may be connected to each other in series and/or parallel to constitute a single battery pack. Additionally, the battery pack may be built into the vehicle as a power source for the vehicle. Since the general structure and the manufacturing method of the battery pack and the vehicle are known to those skilled in the art, detailed descriptions thereof will not be given herein.

### [ADVANTTAGEOUS EFFECTS]

The present disclosure may provide a structure of a battery cell capable of suppressing heat propagation within the battery cell to prevent ignition of the battery cell.

In addition, the present disclosure may provide a battery cell and a structure of a battery module including the same capable of suppressing heat propagation from the inside to the outside of the battery cell and between battery cells to prevent serial ignition.

The present disclosure is also advantageous that a battery cell and a structure of a battery module of the present disclosure may be manufactured by the manufacturing method and manufacturing equipment of conventional battery modules without reducing the energy density or the performance of the battery to achieve the above-described effects. In addition, according to the present disclosure, heat propagation between electrode assemblies may be suppressed without affecting the impregnation of the separator included in the electrode assembly with the electrolyte solution.

In addition, the present disclosure may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 are a perspective view and a cross-sectional view illustrating a battery cell, respectively.
FIG. 3 is a cross-sectional view illustrating a battery cell according to reference examples of the present disclosure.
FIG. 4 is a cross-sectional view illustrating a battery cell according to reference examples of the present disclosure.
FIG. 5 is a cross-sectional view illustrating a battery cell according to reference examples of the present disclosure.
FIG. 6 is a perspective view illustrating a battery cell with the pouch thereof removed the according to reference examples of the present disclosure.
FIG. 7 is an exploded perspective view illustrating a battery cell according to reference examples of the present disclosure.
FIGS. 8 and 9 are a cross-sectional view and an exploded perspective view of illustrating a battery cell, respectively, according to reference examples of the present disclosure.
FIGS. 10 and 11 are a cross-sectional view and an exploded perspective view illustrating a battery cell, respectively, according to embodiments of the present invention.
FIGS. 12 and 13 are a perspective view and an exploded perspective view illustrating a battery module including a pouch type battery cell, respectively.
FIG. 14 is an enlarged cross-sectional view illustrating a battery cell laminate according to reference examples of the present disclosure.
FIG. 15 is an enlarged cross-sectional view illustrating a battery cell laminate according to reference examples of the present disclosure.
FIGS. 16 and 17 are perspective views illustrating a battery pack including a battery module according to the present disclosure and a vehicle including the battery pack, respectively.

### [DESCRIPTION OF REFERENCE NUMERALS]

1: battery cell
   11: electrode assembly
      111: first electrode assembly
      112: second electrode assembly
   12: electrode tab
      121: first electrode tab
      122: second electrode tab
   13: electrode lead
      131: first weld portion
      132: second weld portion
      133: lead portion
      134: lead film
   14: pouch
   15: first insulation pad
2: battery module
   21: battery cell laminate
      211: second insulation pad
   22: housing
      221: U frame
      222: top plate
      223: end plate
X: lengthwise direction/front and rear directions
Y: thicknesswise direction/left and right directions/stacking direction
Z: widthwise direction/upward and downward directions/heightwise direction
P: battery pack
V: vehicle

### [DETAILED DESCRIPTION OF THE INVENTION]

The above-described objects, features and advantages will be described in detail hereinafter with reference to the accompanying drawings such that those skilled in the art will be able to implement the technical idea of the present disclosure. In describing the present disclosure, when it is determined that a detailed description of prior art related to the present disclosure unnecessarily obscures the gist of the present disclosure, the detailed description thereof will be omitted. Hereinafter, embodiments according to the present disclosure will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

In addition, the expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, embodiments of the present disclosure will be described with reference to the accompanying drawings.

FIGS. 1 and 2 are a perspective view and a cross-sectional view illustrating a battery cell, respectively. Referring to FIGS. 1 and 2, the battery cell 1 may include an electrode assembly 11, an electrode tab 12, a pouch 14 and an electrode lead 13.

The electrode assembly 11 may be manufactured by stacking a plurality of electrodes with a separator interposed therebetween.

The electrode may include an anode and a cathode, and the electrode assembly 11 may be manufactured by alternately stacking the anode and the cathode with the separator interposed therebetween.

The electrode tab 12 may extend from the electrode and protrude from the electrode assembly 11.

The electrode tab 12 may include an anode tab extending from the anode and a cathode tab extending from the cathode.

The electrode tab 12 may extend from each of a plurality of electrodes having the same polarity and be stacked on one another to constitute a single tab. Here, the electrode tab 12 may be stacked and welded to one another. The welding may include at least one method selected from various welding methods including ultrasonic welding, laser welding and resistance welding. In addition, as the electrode includes of the anode and the cathode, the anode tab may be stacked on one another to collectively constitute a single anode tab, and the cathode tabs may be stacked on one another to collectively constitute a single cathode tab.

The pouch 14 is sealed with the electrode assembly 11 accommodated therein.

The pouch 14 may include metal foil.

The pouch 14 accommodates the electrode assembly 11 and has three sealed sides and one folded side. Here, the folded side may be a side corresponding to one heightwise end of the battery cell 1. In addition, the sealing may be achieved by fusion of a synthetic resin layer coated on the inner surface of the pouch 14.

The electrode lead 13 is connected to the electrode tab 12 and protrudes from the pouch 14.

The connection between the electrode lead 13 and the electrode tab 12 may be achieved by welding. The welding may include at least one method selected from various welding methods including ultrasonic welding, laser welding and resistance welding. However, as long as electrical connection between the electrode lead 13 and the electrode tab 12 can be established, the method is not limited to welding.

A lead film 134 may be provided on the electrode lead 13 to surround the electrode lead 13 in widthwise direction thereof.

The lead film 134 may include a synthetic resin.

The lead film 134 is provided at a portion of the electrode lead 13 corresponding to the sealed sides of the pouch 14, and is fused as the pouch 14 is sealed while insulating the electrode lead 13 from the pouch 14 at the same time.

Meanwhile, there is a risk of ignition due to overheating of the battery cell caused by a short circuit. When the battery cell ignites, heat, flame and gas may be emitted from the battery cell. In addition, heat, flame and gas due to ignition of a battery cell may spread to other neighboring battery cells, causing serial ignition.

Accordingly, the present disclosure provides a structure of a battery cell and a battery module including the same, wherein battery cell includes: an electrode assembly formed by stacking a plurality of electrodes with a separator interposed therebetween; an electrode tab extending from each of the plurality of electrodes to protrude from the electrode assembly; a sealed pouch accommodating the electrode assembly; and an electrode lead electrically connected to the electrode tab and protruding from the pouch, the electrode assembly being provided in plurality and stacked together with a first insulation pad in a thicknesswise direction.

Hereinafter, embodiments of a battery cell according to the present disclosure will be described with reference to the drawings.

### [FIRST REFERENCE EXAMPLE]

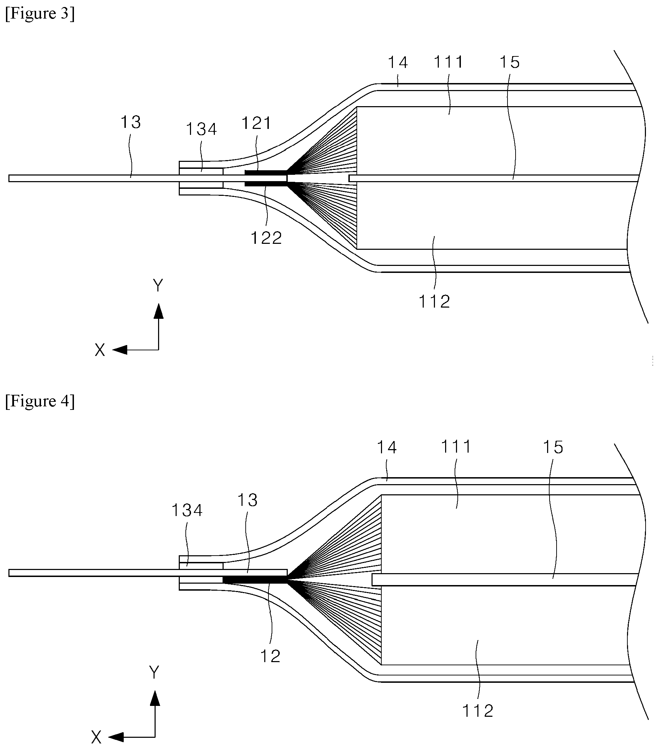

FIG. 3 is a cross-sectional view illustrating a battery cell according to reference examples of the present disclosure. With reference to FIG. 3, a plurality of electrode assemblies 11 may be provided in the battery cell 1.

The electrode assembly 11 may be provided in pair, and each electrode assembly 11 may include a first electrode assembly 111 and a second electrode assembly 112.

Hereinafter, while two electrode assemblies 11 are exemplified according to the embodiments and drawings, the technical solution of the present disclosure described below may apparently be applied to a case where the number of electrode assemblies 11 is greater than two.

The electrode assemblies 11 are stacked in a thicknesswise direction along with the first insulation pad 15.

The electrode assemblies 11 provided with the first insulation pad 15 interpose therebetween as shown in FIG. 3.

The first insulation pad 15 may include an insulating material. For example, the first insulation pad 15 may include an insulating synthetic resin.

The first insulation pad 15 includes a heat-resistant and fire-resistant material.

The first insulation pad 15 may include compressible material. In such case, the first insulation pad 15 may be capable of absorb swelling and tolerance of the battery cell 1.

The electrode tab 12 may include a first electrode tab 121 protruding from the first electrode assembly 111 and a second electrode tab 122 protruding from the second electrode assembly 112.

The first electrode tab 121 and the second electrode tab 122 may be connected to the electrode lead 13 in parallel.

The first electrode tab 121 and the second electrode tab 122 may be welded to two thicknesswise ends of the electrode lead 13, respectively.

According to the first reference example, a plurality of electrode assemblies 11 are provided. Even when one of the electrode assemblies 11 generates heat, the heat may not be transmitted to the other electrode assemblies 11 due to the first insulation pad 15 interposed between the electrode assemblies 11. Accordingly, the rise in the inner temperature of the battery cell 1 is reduced. Furthermore, ignition of the battery cell 1 can be suppressed.

In addition, according to the first reference example, it is advantageous that the present disclosure may be embodied simply using the plurality of electrode assemblies 11 without changing the shape of the electrode lead 13 by welding the plurality of electrode tabs 12 protruding from the plurality of electrode assemblies 11, respectively, to both sides of the electrode lead 13[SECOND REFERENCE EXAMPLE]

FIG. 4 is a cross-sectional view illustrating a battery cell according to a second reference example of the present disclosure. Referring to FIG. 4, the first electrode tab 121 and the second electrode tab 122 may be stacked together and welded to one side surface of the electrode lead 13.

According to the second reference example, it is advantageous that the electrode lead 13 and the electrode tab 12 may be connected by just one welding process, regardless of the number of electrode assemblies 11.

Additionally, according to the second reference example, since the welding process between the electrode lead 13 and the electrode tab 12 is the same as that of a case where there is only one electrode assembly 11, it is advantageous that the welding between the electrode lead 13 and the electrode tab 12 is possible using the same manufacturing process and manufacturing equipment as those of the case where there is only one electrode assembly 11.

### [THIRD REFERENCE EXAMPLE]

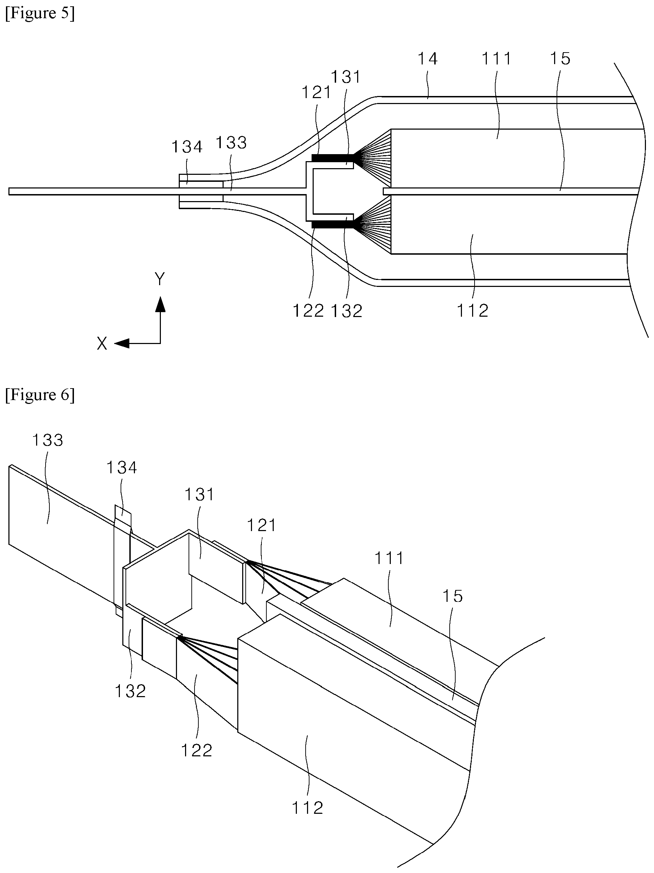

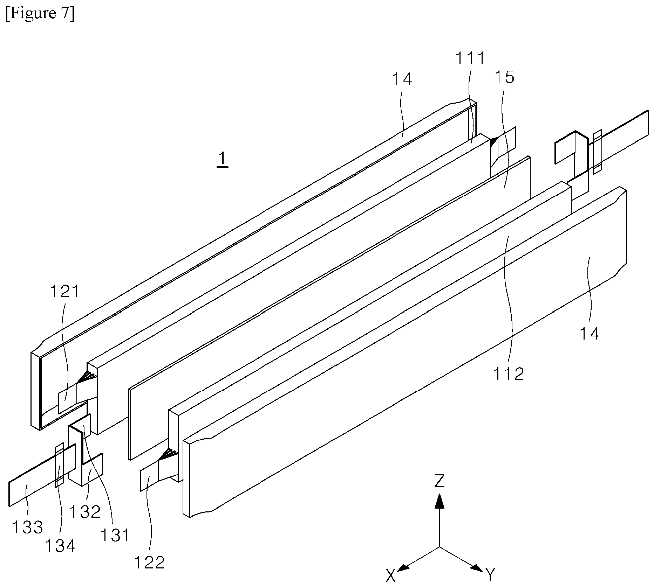

FIG. 5 is a cross-sectional view illustrating a battery cell according to a third reference example of the present disclosure, FIG. 6 is a perspective view illustrating a battery cell with the pouch thereof removed the according to the third reference example of the present disclosure, and FIG. 7 is an exploded perspective view illustrating the battery cell of FIG. 5. Referring to FIGS. 5 to 7, the electrode lead 13 may include a lead portion 133, a first weld portion 131 and a second weld portion 132.

The lead portion 133 may extend toward one side of the lengthwise direction and protrude from the pouch 14. The battery cell 1 may be electrically connected to the outside through the lead portion 133.

The first electrode tab 121 may be welded to the first weld portion 131, and the second electrode tab 122 may be welded to the second weld portion 132.

The first weld portion 131 and the second weld portion 132 may be provided in a form that protrudes toward the other side in the lengthwise direction.

The first electrode assembly 111 may be disposed on one side of the thicknesswise direction compared to the second electrode assembly 112. Accordingly, the first electrode tab 121 may be disposed on one side of the thicknesswise direction compared to the second electrode tab 122. Here, the first weld portion 131 may be disposed on one side of the thicknesswise direction with respect to the lead portion 133, and the second weld portion 132 may be disposed on the other side of the thicknesswise direction with respect to the lead portion 133.

Additionally, the first electrode tab 121 may be disposed on one side of the heightwise direction compared to the second electrode tab 122. Here, the first weld portion 131 may be disposed on one side of the heightwise direction with respect to the lead portion 133, and the second weld portion 132 may be disposed on the other side of the heightwise direction with respect to the lead portion 133.

According to the third reference example, the first electrode tab 121 may be disposed on one side of the thicknesswise direction and one side of the heightwise direction compared to the second electrode tab 122. Here, the first weld portion 131 may be disposed on one side of the thicknesswise direction and one side of the heightwise direction with respect to the lead portion 133, and the second weld portion 132 may be disposed on the other side of the thicknesswise direction and the other side of the heightwise direction with respect to the lead portion 133.

According to the third reference example, since the weld portion of the first electrode tab 121 to the electrode lead 13 and the weld portion of the second electrode tab 122 to the electrode lead 13 are staggered as described above, the interference between the first electrode tab 121 and the second electrode tab 122 may be prevented, thereby simplifying the welding process.

In addition, according to the third reference example, since the first weld portion 131 and the second weld portion 132 protrudes toward the first electrode assembly 111 and the second electrode assembly 112, respectively, it is advantageous that the electrode tab 12 may be shorter compared to a case where both of the first electrode tab 121 and the second electrode tab 122 are welded directly to the electrode lead located at the center in the thicknesswise direction.

### [FOURTH REFERENCE EXAMPLE]

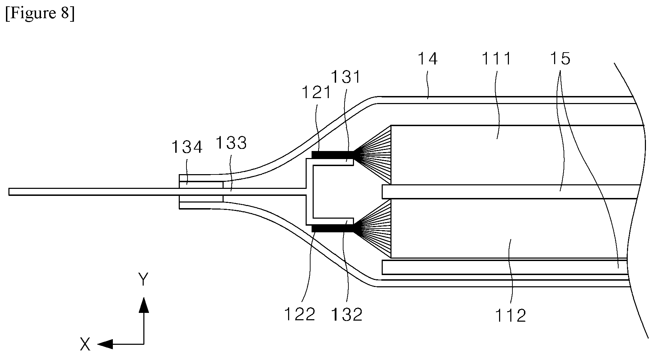

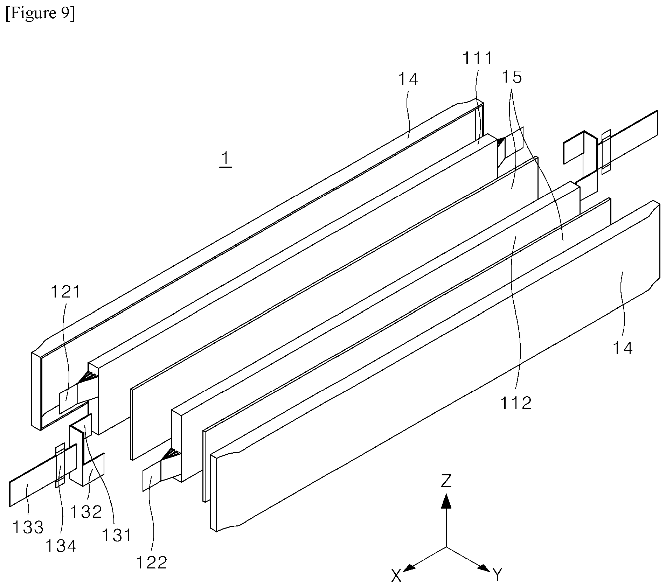

FIGS. 8 and 9 are a cross-sectional view and an exploded perspective view of illustrating a battery cell, respectively, according to a fourth reference example of the present disclosure. Referring to FIGS. 8 and 9, the electrode assembly 11 and the first insulation pad 15 may be alternately stacked. For example, the electrode assembly 11 and the first insulation pad 15 may be stacked in the sequence of or in the reverse sequence of the first electrode assembly 111, the first insulation pad 15, the second electrode assembly 112 and the first insulation pad 15.

According to the fourth reference example, the first insulation pad 15 is laminated on one thicknesswise side surface or the other thicknesswise side surface of each and every electrode assembly 11. Therefore, even when a plurality of the battery cells 1 are stacked on each other in the thicknesswise direction, the first insulation pad 15 is interposed between each and every electrode assembly 11 and neighboring electrode assembly thereof, thereby more effectively preventing heat propagation between electrode assemblies 11. A more detailed description will be given in the description of the sixth reference example.

### [FIFTH EMBODIMENT]

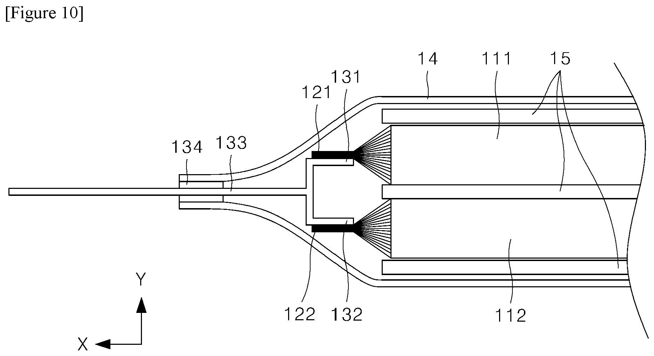

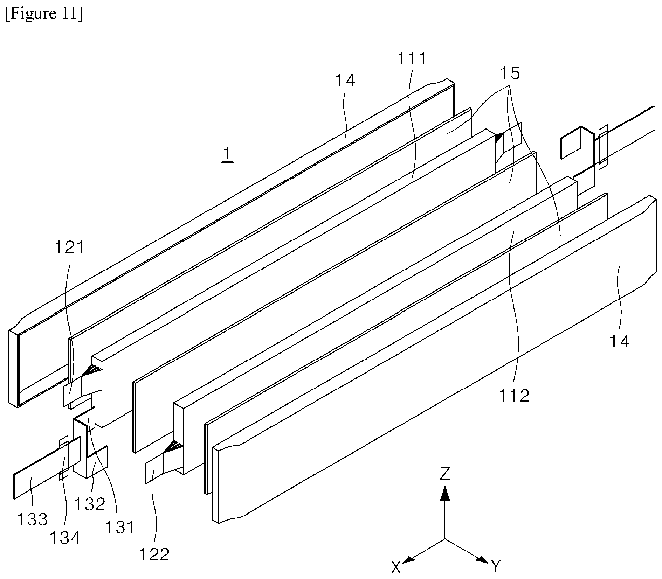

FIGS. 10 and 11 are a cross-sectional view and an exploded perspective view illustrating a battery cell, respectively, according to a fifth embodiment of the present invention. Referring to FIGS. 10 and 11, the first insulation pad 15 is interposed between the electrode assemblies 11. For example, the electrode assembly 11 and the first insulation pad 15 may be stacked in the sequence of or in the reverse sequence of the first insulation pad 15, the first electrode assembly 111, the first insulation pad 15, the second electrode assembly 112 and the first insulation pad 15.

According to the fifth embodiment, it is advantageous that heat propagation may be blocked in the inside of the battery cell 1, and at the same time, heat emission to the outside may be blocked, thereby preventing ignition and heat generation at the battery cell level.

According to the present disclosure including the above-described embodiment, heat propagation in the battery cell 1 is blocked, thereby preventing ignition of the battery cell 1, and also preventing heat propagation between the battery cells 1, thereby preventing serial ignition.

In addition, according to the present disclosure, it is advantageous that the present disclosure may be embodied while maintaining the existing design without sacrificing the specifications and performance of the battery cell 1 including energy density.

Meanwhile, in order to increase the charge and discharge capacity and/or power, a plurality of battery cells 1 may be connected to each other in series and/or parallel to constitute a single battery module. The present disclosure provides a structure of a battery module including a plurality of the battery cells. Hereinafter, embodiments of a battery cell according to the present disclosure will be described with reference to the drawings.

FIGS. 12 and 13 are a perspective view and an exploded perspective view illustrating a battery module including a pouch type battery cell, respectively. Referring to FIGS. 12 and 13, the battery module 2 may include a battery cell laminate 21 and a housing 22.

The battery cell laminate 21 may be manufactured by stacking a plurality of the battery cells 1.

The battery cell laminate 21 may include a busbar plate provided with a busbar. The electrode lead 13 may be welded to the busbar, and the busbar can be connected to a terminal. The battery module 2 may be electrically connected to the outside through the terminal.

The battery cell laminate 21 can be accommodated in the housing 22.

The housing 22 includes: a U frame 221 with an open top, an open front end and an open rear end; a top plate 222 covering the open top of the U frame 221; and a pair of end plate 223 covering the front and rear ends of the U frame.

The terminal may be exposed through the end plate 223.

### [SIXTH REFERENCE EXAMPLE]

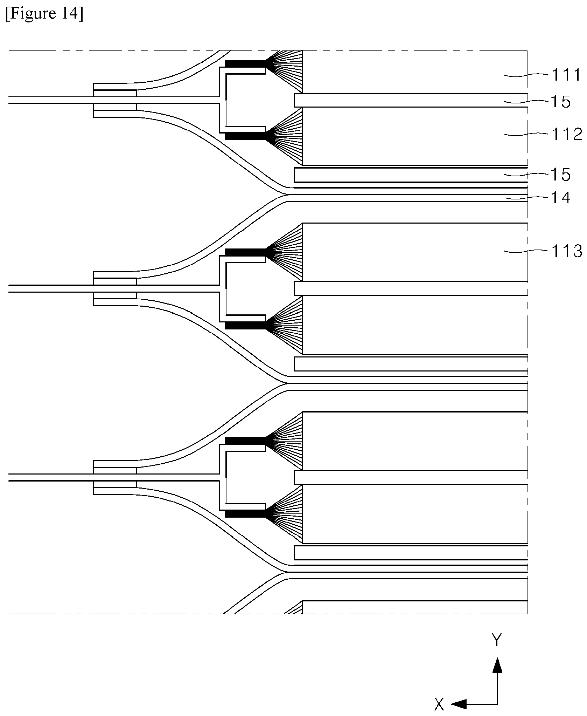

FIG. 14 is an enlarged cross-sectional view illustrating a battery cell laminate according to a sixth reference example of the present disclosure. Referring to FIG. 14, the battery cell laminate 21 may be manufactured by stacking a plurality of battery cells 1 according to the fourth reference example.

In this case, the first insulation pad 15 may be interposed between the first electrode assembly 111 and the second electrode assembly 112, and between the first electrode assembly 113 of the battery cell adjacent to the battery cell 1 on the other side in the thicknesswise direction and the second electrode assembly 112. As a result, the first insulation pad 15 may be interposed between all neighboring electrode assemblies 11, and heat propagation between electrode assemblies 11 may be blocked.

In addition, according to the sixth reference example, in a battery module generally incorporating a pouch type battery cell, it is advantageous that the energy density of the entire battery module may not decrease or may even increase since the first insulation pad 15 built into the battery cell 1 is capable of absorbing swelling and tolerance and blocking heat propagation between battery cells even when a compressible pad for absorbing swelling and tolerance and an insulating pad for blocking heat between battery cells are not separately provided.

### [SEVENTH REFERENCE EXAMPLE]

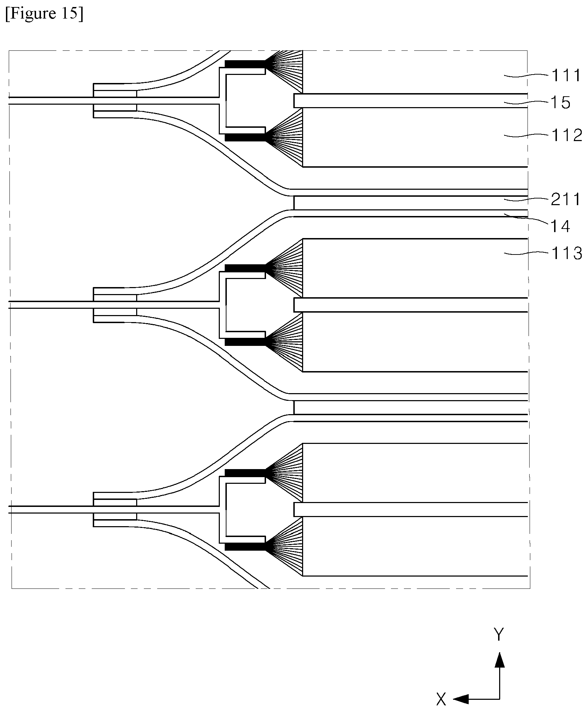

FIG. 15 is an enlarged cross-sectional view illustrating a battery cell laminate according to a seventh reference example of the present disclosure. Referring to FIG. 15, the battery cell laminate 21 may be manufactured by stacking a plurality of battery cells 1 and second insulation pads 211 according to the first to third reference examples.

The second insulation pad 211 may be stacked with the battery cell 1 in various ways. For example, the second insulation pad 211 may be interposed every predetermined number of battery cells 1 regarded as a group.

According to the seventh reference example, the battery cell 1 may be interposed between the second insulation pads 211 or the second insulation pad 211 may be interposed between the battery cells 1.

The second insulation pad 211 may include compressible material. In such case, the second insulation pad 211 may absorb the swelling of the battery cell 1 and the tolerance between the battery cell 1 and the housing 22.

In such case, the first insulation pad may be interposed between the first electrode assembly 111 and the second electrode assembly 112, and second electrode assembly 112 may be interposed between the first electrode assembly 113 of the battery cell adjacent to the battery cell 1 on the other side in the thicknesswise direction and the second electrode assembly 112. Accordingly, at least one of the first insulation pad 15 and the second insulation pad 211 may be interposed between all neighboring electrode assemblies 11, and heat propagation between the electrode assemblies 11 may be blocked.

The present disclosure also provides a battery pack with a plurality of the battery modules built in, and a vehicle including the battery pack.

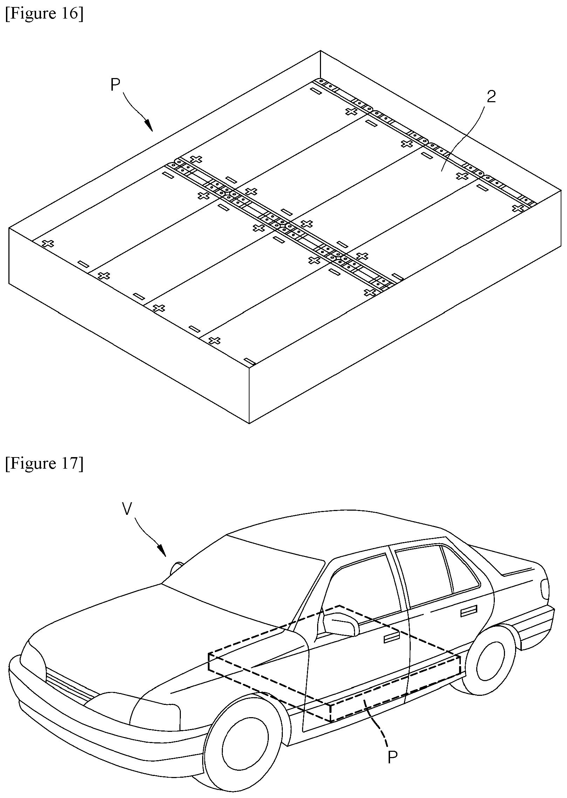

FIGS. 16 and 17 are perspective views illustrating a battery pack including a battery module according to the present disclosure and a vehicle including the battery pack, respectively. Referring to FIGS. 16 and 17, in order to increase the charge and discharge capacity and/or power, a plurality of battery modules 2 may be connected to each other in series and/or parallel to constitute a single battery pack P. Additionally, the battery pack P may be built into the vehicle V as a power source for the vehicle V. Since the general structure and the manufacturing method of the battery pack P and the vehicle V are known to those skilled in the art, detailed descriptions thereof will not be given herein.

It should be understood that the described embodiments are illustrative in all respects and not restrictive, and the scope of the present disclosure will be indicated by the following claims rather than the described detailed description.

Although the present disclosure has been described with reference to the exemplified drawings, it is to be understood that the present disclosure is not limited to the embodiments and drawings disclosed in this specification, and those skilled in the art will appreciate that various modifications are possible without departing from the scope and idea of the present disclosure. Further, although the operating effects according to the configuration of the present disclosure are not explicitly described while describing an embodiment of the present disclosure, it should be appreciated that predictable effects are also to be recognized by the configuration.

## Claims

1. A battery cell comprising:
an electrode assembly (11) including a stack of a plurality of electrodes with a separator therebetween;
an electrode tab (12) extending from each of the plurality of electrodes and protruding from the electrode assembly (11);
a sealed pouch (14) accommodating the electrode assembly (11); and
an electrode lead (13) electrically connected to the electrode tab (12) and protruding from the sealed pouch (14),
wherein the electrode assembly (11) is a plurality of electrode assemblies (11); and is stacked with a plurality of first insulation pads (15) in a thickness direction, wherein each first insulation pad (15) includes a heat-resistant and fire-resistant material,
wherein each of the plurality of electrode assemblies (11) is between the plurality of first insulation pads (15).

2. The battery cell (1) of claim 1, wherein the electrode assembly (11) is a pair of electrode assemblies comprising a first electrode assembly (111) and a second electrode assembly (112), wherein the electrode tab (12) comprises:
a first electrode tab (121) protruding from the first electrode assembly (111); and
a second electrode tab (122) protruding from the second electrode assembly (112), and
wherein the first electrode tab (121) and the second electrode tab (122) are connected to the electrode lead (13) in parallel.

3. The battery cell of claim 2, wherein the first electrode tab (121) and the second electrode tab (122) are welded to two ends of the electrode lead (13) in a thickness direction, respectively.

4. The battery cell (1) of claim 2, wherein the first electrode tab (121) and the second electrode tab (122) are stacked on each other and welded to two ends of the electrode lead (13) in a thickness direction, respectively.

5. The battery cell (1) of claim 2, wherein the electrode lead (13) comprises:
a lead portion (133) protruding outward from the pouch (14);
a first weld portion (131) where the first electrode tab (121) is welded; and
a second weld portion (132) where the second electrode tab (122) is welded

6. The battery cell (1) of claim 5, wherein the first electrode assembly (111) is disposed on one side of the thickness direction compared to the second electrode assembly (112),
the first weld portion (131) is disposed on the one side of the thickness direction with respect to the lead portion (133), and
the second weld portion (132) is disposed on the other side of the thickness direction with respect to the lead portion (133).

7. The battery cell (1) of claim 5, wherein the first electrode tab (121) is disposed on one side of a height direction compared to the second electrode tab (122),
the first weld portion (131) is disposed on the one side of the height direction with respect to the lead portion (133), and
the second weld portion (122) is disposed on the other side of the height direction with respect to the lead portion (133).

8. A battery module (2) comprising a battery cell stack comprising the plurality of battery cells (1) of one of claims 1 to 7 stacked in a thickness direction.

9. The battery module (2) of claim 8, wherein the battery cell stack further comprises a second insulation pad (211) stacked along with the plurality of battery cells (1).

10. The battery module (2) of claim 9, wherein the second insulation pad (211) is between the plurality of battery cells (1).

11. The battery module (2) of claim 9, wherein the plurality of battery cells (1) are between a plurality of second insulation pads (211).

## Patentansprüche

1. Batteriezelle, umfassend:
• eine Elektrodenbaugruppe (11), die einen Stapel aus einer Vielzahl von Elektroden mit einem dazwischen angeordneten Separator aufweist;
• eine Elektrodenlasche (12), die sich von jeder der Vielzahl von Elektroden erstreckt und aus der Elektrodenbaugruppe (11) herausragt;
• einen abgedichteten Beutel (14), der die Elektrodenbaugruppe (11) aufnimmt; und
• eine Elektrodenleitung (13), die elektrisch mit der Elektrodenlasche (12) verbunden ist und aus dem abgedichteten Beutel (14) herausragt,
wobei die Elektrodenbaugruppe (11) eine Vielzahl von Elektrodenbaugruppen (11) ist und mit einer Vielzahl von ersten Isolierpads (15) in einer Dickenrichtung gestapelt ist, wobei jedes erste Isolierpad (15) ein hitzebeständiges und feuerbeständiges Material aufweist,
wobei sich jede der Vielzahl von Elektrodenbaugruppen (11) zwischen der Vielzahl von ersten Isolierpads (15) befindet.

2. Batteriezelle (1) nach Anspruch 1, wobei die Elektrodenbaugruppe (11) ein Paar von Elektrodenbaugruppen ist, das eine erste Elektrodenbaugruppe (111) und eine zweite Elektrodenbaugruppe (112) umfasst,
wobei die Elektrodenlasche (12) umfasst:
• eine erste Elektrodenlasche (121), die aus der ersten Elektrodenbaugruppe (111) herausragt; und
• eine zweite Elektrodenlasche (122), die aus der zweiten Elektrodenbaugruppe (112) herausragt, und
wobei die erste Elektrodenlasche (121) und die zweite Elektrodenlasche (122) parallel mit der Elektrodenleitung (13) verbunden sind.

3. Batteriezelle nach Anspruch 2, wobei die erste Elektrodenlasche (121) und die zweite Elektrodenlasche (122) jeweils an zwei Enden der Elektrodenleitung (13) in einer Dickenrichtung angeschweißt sind.

4. Batteriezelle (1) nach Anspruch 2, wobei die erste Elektrodenlasche (121) und die zweite Elektrodenlasche (122) aufeinandergestapelt und jeweils an zwei Enden der Elektrodenleitung (13) in einer Dickenrichtung angeschweißt sind.

5. Batteriezelle (1) nach Anspruch 2, wobei die Elektrodenleitung (13) umfasst:
• einen Leitungsabschnitt (133), der aus dem Beutel (14) nach außen herausragt;
• einen ersten Schweißabschnitt (131), an dem die erste Elektrodenlasche (121) angeschweißt ist; und
• einen zweiten Schweißabschnitt (132), an dem die zweite Elektrodenlasche (122) angeschweißt ist.

6. Batteriezelle (1) nach Anspruch 5, wobei die erste Elektrodenbaugruppe (111) im Vergleich zur zweiten Elektrodenbaugruppe (112) auf einer Seite der Dickenrichtung angeordnet ist,
der erste Schweißabschnitt (131) in Bezug auf den Leitungsabschnitt (133) auf der einen Seite der Dickenrichtung angeordnet ist, und
der zweite Schweißabschnitt (132) in Bezug auf den Leitungsabschnitt (133) auf der anderen Seite der Dickenrichtung angeordnet ist.

7. Batteriezelle (1) nach Anspruch 5, wobei die erste Elektrodenlasche (121) im Vergleich zur zweiten Elektrodenlasche (122) auf einer Seite einer Höhenrichtung angeordnet ist,
der erste Schweißabschnitt (131) in Bezug auf den Leitungsabschnitt (133) auf der einen Seite der Höhenrichtung angeordnet ist, und
der zweite Schweißabschnitt (132) in Bezug auf den Leitungsabschnitt (133) auf der anderen Seite der Höhenrichtung angeordnet ist.

8. Batteriemodul (2), umfassend einen Batteriezellenstapel, der die Vielzahl von Batteriezellen (1) nach einem der Ansprüche 1 bis 7, gestapelt in einer Dickenrichtung, umfasst.

9. Batteriemodul (2) nach Anspruch 8, wobei der Batteriezellenstapel ferner ein zweites Isolierpad (211) umfasst, das zusammen mit der Vielzahl von Batteriezellen (1) gestapelt ist.

10. Batteriemodul (2) nach Anspruch 9, wobei sich das zweite Isolierpad (211) zwischen der Vielzahl von Batteriezellen (1) befindet.

11. Batteriemodul (2) nach Anspruch 9, wobei sich die Vielzahl von Batteriezellen (1) zwischen einer Vielzahl von zweiten Isolierpads (211) befindet.

## Revendications

1. Élément de batterie comprenant :
• un ensemble d'électrodes (11) comprenant un empilement d'une pluralité d'électrodes avec un séparateur entre elles ;
• une patte d'électrode (12) s'étendant depuis chacune de la pluralité d'électrodes et faisant saillie depuis l'ensemble d'électrodes (11) ;
• une poche scellée (14) logeant l'ensemble d'électrodes (11) ; et
• un conducteur d'électrode (13) connecté électriquement à la patte d'électrode (12) et faisant saillie depuis la poche scellée (14),
dans lequel l'ensemble d'électrodes (11) est une pluralité d'ensembles d'électrodes (11) ; et est empilé avec une pluralité de premiers tampons isolants (15) dans une direction de l'épaisseur, dans lequel chaque premier tampon isolant (15) comprend un matériau résistant à la chaleur et résistant au feu,
dans lequel chacun de la pluralité d'ensembles d'électrodes (11) est entre la pluralité de premiers tampons isolants (15).

2. Élément de batterie (1) selon la revendication 1, dans lequel l'ensemble d'électrodes (11) est une paire d'ensembles d'électrodes comprenant un premier ensemble d'électrodes (111) et un second ensemble d'électrodes (112),
dans lequel la patte d'électrode (12) comprend :
• une première patte d'électrode (121) faisant saillie depuis le premier ensemble d'électrodes (111) ; et
• une seconde patte d'électrode (122) faisant saillie depuis le second ensemble d'électrodes (112), et
dans lequel la première patte d'électrode (121) et la seconde patte d'électrode (122) sont connectées au conducteur d'électrode (13) en parallèle.

3. Élément de batterie selon la revendication 2, dans lequel la première patte d'électrode (121) et la seconde patte d'électrode (122) sont soudées à deux extrémités du conducteur d'électrode (13) dans une direction de l'épaisseur, respectivement.

4. Élément de batterie (1) selon la revendication 2, dans lequel la première patte d'électrode (121) et la seconde patte d'électrode (122) sont empilées l'une sur l'autre et soudées à deux extrémités du conducteur d'électrode (13) dans une direction de l'épaisseur, respectivement.

5. Élément de batterie (1) selon la revendication 2, dans lequel le conducteur d'électrode (13) comprend :
• une partie de conducteur (133) faisant saillie vers l'extérieur depuis la poche (14) ;
• une première partie de soudure (131) où la première patte d'électrode (121) is soudée ; et
• une seconde partie de soudure (132) où la seconde patte d'électrode (122) est soudée.

6. Élément de batterie (1) selon la revendication 5, dans lequel le premier ensemble d'électrodes (111) est disposé sur un côté de la direction de l'épaisseur par rapport au second ensemble d'électrodes (112),
la première partie de soudure (131) est disposée sur ledit un côté de la direction de l'épaisseur par rapport à la partie de conducteur (133), et
la seconde partie de soudure (132) est disposée sur l'autre côté de la direction de l'épaisseur par rapport à la partie de conducteur (133).

7. Élément de batterie (1) selon la revendication 5, dans lequel la première patte d'électrode (121) est disposée sur un côté d'une direction de la hauteur par rapport à la seconde patte d'électrode (122),
la première partie de soudure (131) est disposée sur ledit un côté de la direction de la hauteur par rapport à la partie de conducteur (133), et
la seconde partie de soudure (132) est disposée sur l'autre côté de la direction de la hauteur par rapport à la partie de conducteur (133).

8. Module de batterie (2) comprenant un empilement d'éléments de batterie comprenant la pluralité d'éléments de batterie (1) selon l'une des revendications 1 à 7 empilés dans une direction de l'épaisseur.

9. Module de batterie (2) selon la revendication 8, dans lequel l'empilement d'éléments de batterie comprend en outre un second tampon isolant (211) empilé avec la pluralité d'éléments de batterie (1).

10. Module de batterie (2) selon la revendication 9, dans lequel le second tampon isolant (211) est entre la pluralité d'éléments de batterie (1).

11. Module de batterie (2) selon la revendication 9, dans lequel la pluralité d'éléments de batterie (1) sont entre une pluralité de seconds tampons isolants (211).
